# FASCICULE DE BREVET EUROPEEN

(11) **EP 1 013 214 B1**
(45) Date de publication et mention de la délivrance du brevet: **22.02.2006**
(21) Numéro de dépôt: 99204189.7
(22) Date de dépôt: 07.12.1999
(51) Int. Cl.: A47L 13/58, A47J 47/18

(54) **Seau de nettoyage pourvu d'anses de forme particulière**
Reinigungseimer mit Griffen mit einer besonderen Form
Cleaning bucket with handles of a particular shape

(30) Priorité: 18.12.1998 LU 90331
(43) Date de publication de la demande: 28.06.2000
(73) Titulaire: FILMOP S.r.l., 35010 Villa del Conte, (PD) (IT)
(72) Inventeur:
(74) Mandataire: Waxweiler, Jean

(56) Documents cités:
- EP-A- 0 570 900
- EP-A- 0 801 925
- WO-A-97/13446
- DE-U- 8 606 934

## Description

La présente invention concerne un seau de nettoyage pourvu d'anses.

Les équipements de nettoyage qui sont constitués de chariots et. de seaux montés sur ces chariots, en étant complétés éventuellement d'un appareil d'essorage, sont bien connus- En général, les seaux montés sur les chariots sont au nombre de deux à savoir l'un pour l'eau propre et l'autre pour l'eau sale. Les seaux actuellement utilisés sont pourvus d'une anse arquée unique articulée sur le bord du seau. Si les chariots sont réalisés de manière à supporter un seul seau, ce seau comprend, pour avoir la possibilité de maintenir l'eau propre séparée de l'eau sale, un secteur qui définit deux bassins distincts.

Dans ce cas le seau est pourvu d'une seule anse, disposée parallèlement au secteur interne, ce qui rend la manipulation difficile du fait que les quantités de liquide se trouvant dans les deux bassins ne sont pas au même niveau. Dans ces conditions, le seau se trouve être déséquilibré. Si l'anse du seau est disposée perpendiculairement au secteur interne, la manipulation du seau avec les deux bassins contenant des liquides à des niveaux différents l'un par rapport à l'autre peut s'effectuer normalement. Toutefois, un seau pourvu d'une anse disposée perpendiculairement au secteur interne ne peut pas être monté sur un chariot pour être utilisé avec l'appareil d'essorage, du fait que son anse forme un obstacle pour le montage de l'appareil d'essorage.

Un autre problème apparaît lorsque sur le chariot peut être monté un seul seau de configuration normale pourvu de deux bassins, pour effectuer des opérations d'essorage. L'aire de l'ouverture supérieure du bassin située vers l'intérieur pour l'appareil d'essorage et l'aire de l'ouverture du bassin situé vers l'extérieur pour le rinçage se trouvent être insuffisantes. En fait, lorsqu'on utilise les seaux normaux, une fois choisie la grandeur du bassin nécessaire pour l'appareil d'essorage, l'aire de l'ouverture du bassin restant se trouve être suffisante pour l'immersion de la serpillère devant être rincée.

Un chariot de nettoyage de ce type est décrit dans le document EP-A-0 570 900 pourvu d'anses selon le préambule de la revendication 1.

La présente invention a pour le but de pallier aux inconvenients seaux de nettoyage connus actuellement tels que mentionnés ci-dessus.

Il est par conséquent nécessaire de disposer d'un seau allongé vers l'extérieur, avec la paroi antérieure décalée en avant du profil de la projection en plan du chariot.

La présente invention a pour but de satisfaire à la triple exigence de disposer d'un seau ayant une grandeur appropriée des aires des ouvertures supérieures de chacun des deux bassins, qui peut être manipulé même lorsque les bassins contiennent des liquides à des niveaux différents l'un de l'autre et qui peut être monté sur un chariot pourvue de flancs et équipé d'un appareil d'essorage.

Ces but ainsi que d'autres sont atteints, suivant l'invention, par un seau de nettoyage ayant les caractéristiques de la partie caradérisante de la revendication 1.

Suivant l'invention, il est prévu un seau du type allongé, à deux bassins, dont le secteur interne peut être fixe ou amovible, pourvu de deux anses disposées perpendiculairement au secteur interne, ces anses présentant des configurations particulières.

L'augmentation de la longueur de l'aire de l'ouverture des deux bassins est obtenue en allongeant antérieurement le seau vers l'extérieur et en créant un rebord de la base à l'avant, correspondant à la hauteur de la traverse de retenue qui délimite le plan d'appui du chariot.

Les anses de soulèvement du seau, au nombre de deux, sont appliquées sur les grands côtés du seau, en étant perpendiculaires au secteur qui définit les deux bassins.

La forme des anses est telle qu'une fois le seau monté sur le chariot, au repos (c'est-à-dire non soulevé), après un tronçon initial sensiblement aussi grand que l'épaisseur des flancs du chariot, ces anses s'étendent vers le bas en appui sur l'extérieur des flancs, sensiblement parallèlement à ceux-ci et pratiquement en contact avec eux.

La partie supérieure centrale des anses présente un tronçon assez grand, pratiquement horizontal, pour permettre la prise de ces anses dans des positions décalées par rapport au centre, de manière à obtenir, lors du soulèvement du seau, l'inclinaison de celui-ci dans le sens de sa longueur, afin de faciliter soit l'insertion du seau dans le chariot soit sa désinsertion.

On décrira ci-après, à titre d'exemple non limitatif, une forme d'exécution de la présente invention, en référence aux dessins annexés.

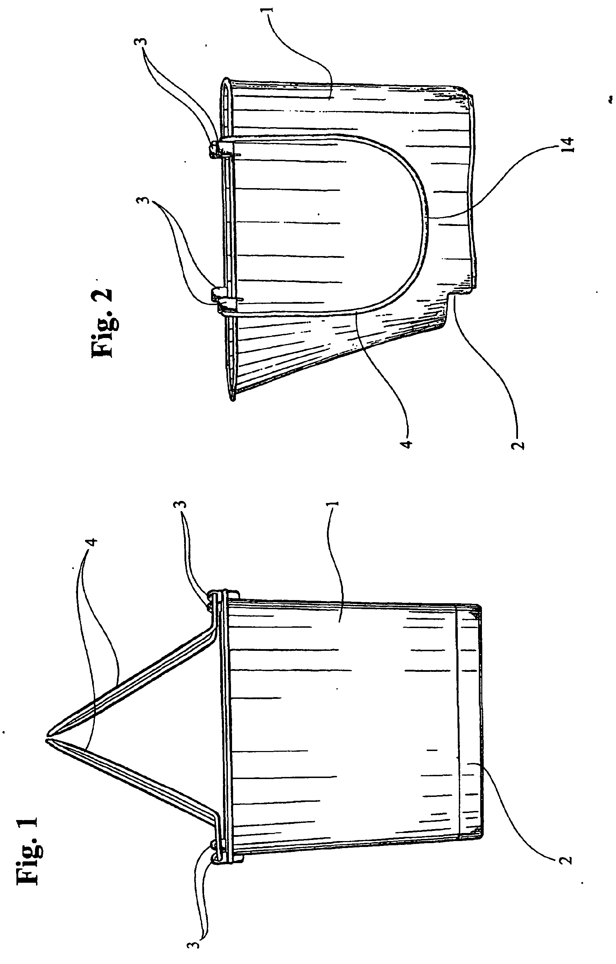

La figure 1 est une vue de l'avant du seau avec les anses soulevées.
La figure 2 est une vue en élévation du seau avec les anses rabattues, cette vue mettant en évidence la portion du fond rehaussée.

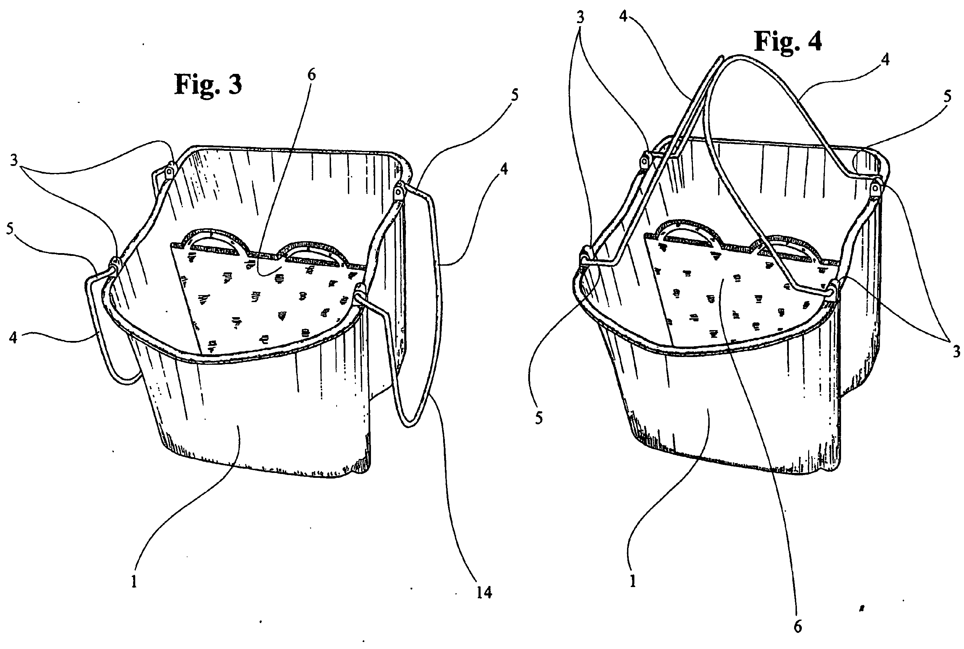

La figure 3 est une vue en perspective, prise du haut, du seau avec ses anses rabattues et pourvu à l'intérieur du secteur qui sépare les deux bassins.
La figure 4 est une vue en perspective similaire, prise du haut, du seau mais avec ses anses soulevées en appui l'une contre l'autre à l'endroit de leurs sommets.

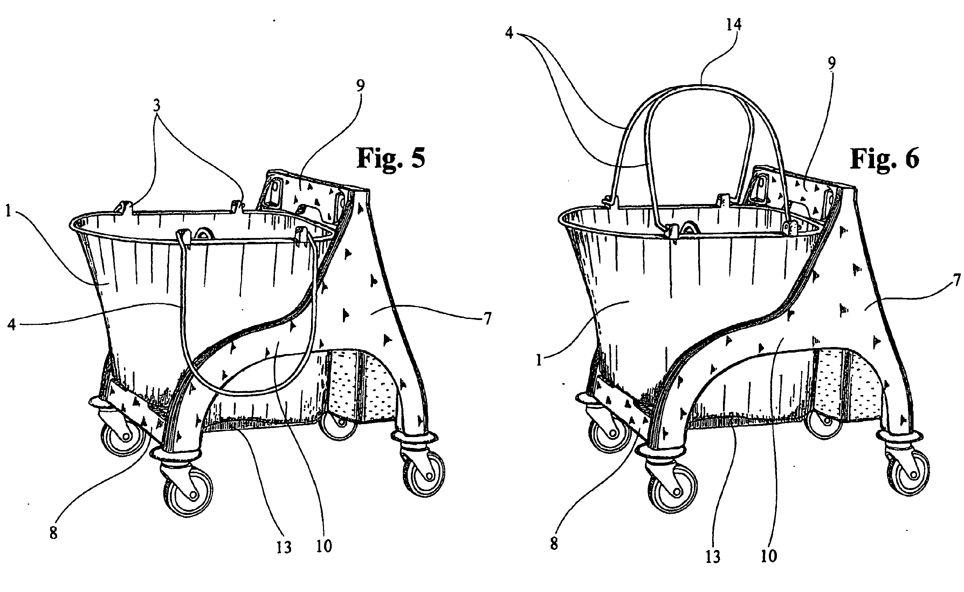

La figure 5 est une we en perspective du seau monté sur un chariot pourvu de flancs. Les anses du seau sont rabattues et se trouvent à l'extérieur des flancs du chariot, dans une position sensiblement parallèle à ces flancs. Dans cette position, il est possible de monter un appareil d'essorage sur la traverse supérieure du chariot proche de la paroi du seau en appui sur le chariot.
La figure 6 est une vue en perspective du seau monté sur un chariot pourvu de flancs. Les anses du seau sont représentées soulevées. La partie rehaussée du fond du seau est en appui sur une traverse antérieure du chariot, tandis que la partie restante du fond est en appui sur le plan porteur du chariot.

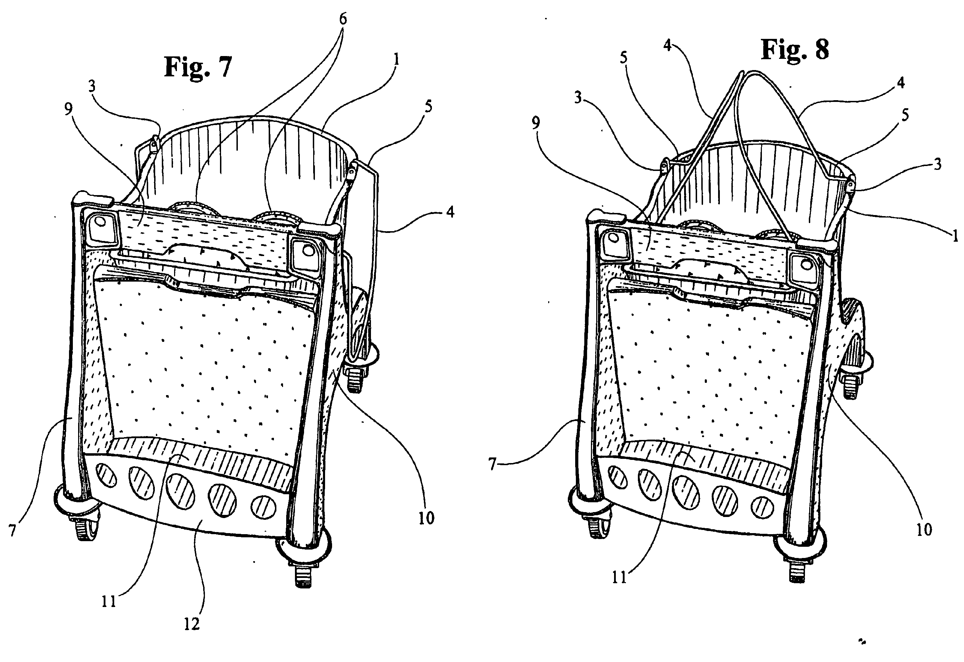

La figure 7 est une vue en perspective, prise du haut et de l'arrière, du même chariot et du seau monté sur celui-ci. Les anses sont rabattues en appui sur l'extérieur des flancs du chariot.
La figure 8 est une vue en perspective, prise du haut et de l'arrière, du même chariot et du seau monté sur celui-ci. Les anses du seau sont soulevées et en appui l'une contre l'autre à l'endroit de leurs sommets.

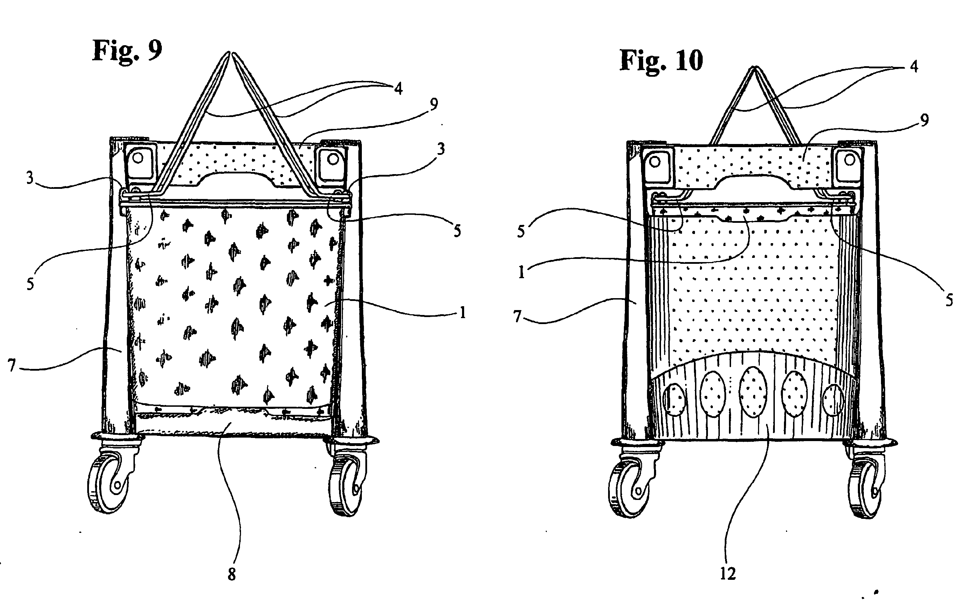

La figure 9 est une vue de l'avant du chariot avec le seau à anses soulevées.
La figure 10 est une vue de l'arrière du chariot avec le seau à anses soulevées.

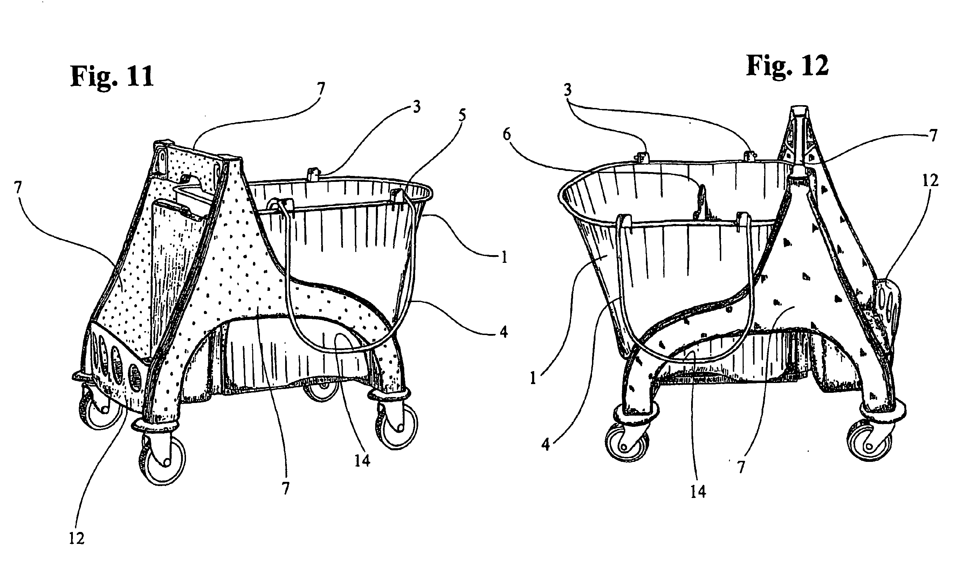

La figure 11 est une vue en perspective, prise d'un côté et partiellement de l'arrière, du même chariot et du seau monté sur celui-ci. Les anses du seau sont rabattues en appui sur l'extérieur des flancs du chariot.
La figure 12 est une vue analogue à celle de la figure 11 mais prise du côté opposé du chariot.

Sur les différentes figures des dessins, on voit un seau 1 présentant un gradin 2 de rehaussement de la base du seau, dans la partie antérieure de celui-ci, ce gradin correspondant à la hauteur totale d'une traverse antérieure 8 d'un chariot 7. Le seau 1 comporte, sur son bord supérieur, des saillies 3 pour l'articulation de deux anses 4 du seau. Chaque anse 4 comporte un tronçon initial 5 qui forme un angle avec la partie restante de l'anse, de telle façon que, lorsque que le seau est monté sur le chariot, les anses s'étendent vers le bas en appui sur les faces externes des flancs du chariot. Le seau comporte un secteur interne 6 qui peut être fixe ou amovible et qui délimite deux bassins distincts du seau. Le chariot 7 comporte la traverse antérieure 8, surélevée par rapport à un plan porteur 13, des flancs 10, une traverse supérieure 9 sur laquelle peut être monté un appareil d'essorage, un compartiment 11 destiné à contenir des bouteilles ou des accessoires du chariot, une barrière 12 de délimitation du compartiment 11. Par ailleurs, les anses 4 du seau comportent chacune un sommet ou tronçon supérieur s'étendant pratiquement horizontalement.

D'après la description précédente, on peut voir l'importance de l'invention en ce qui concerne la structure du seau avec le gradin de rehaussement antérieur du fond, ses anses de forme particulière qui permettent d'utiliser le seau tel quel en pouvant le monter sur un chariot pourvu de flancs, ce seau étant en mesure, une fois complété avec un secteur interne définissant deux bassins distincts, d'assumer les mêmes fonctions qu'avec deux seaux distincts séparés montés sur un chariot ayant un encombrement double.

## Revendications

1. Seau de nettoyage pourvu d'anses (4) comportant des tronçons initiaux (5) et une partie centrale (14), lequel seau (1), lorsqu'il est monté sur un chariot (7) à flancs (10), a les anses (4), par suite de la forme des tronçons initiaux (5) de ces anses (4), qui peuvent s'étendre vers le bas,
**caractérisé en ce que** les anses (4) du seau, monté sur un chariot (7) à flancs (10), s'étendent sur la face extérieure des flancs (10), parallèlement à ceux-ci, pratiquement en contact avec eux, et vers le bas avec un encombrement minimal.

2. Seau de nettoyage pourvu d'anses (4) suivant la revendication 1, **caractérisé en ce que** sa mise en place sur le chariot (7) ou son enlèvement de ce chariot (7) est facilité grâce à la configuration des sommets des anses (4) comportant un tronçon curviligne (14) approprié, pratiquement horizontal, qui permet au seau d'être soulevé en étant incliné dans un sens ou dans l'autre, en saisissant les anses (4) avec une main placée en avant ou en arrière par rapport à la partie centrale (14) de ce tronçon.

3. Seau de nettoyage pourvu d'anses (4) suivant la revendication 1, **caractérisé en ce que** la forme des anses (4) qui permet leur application sur les côtés du seau contigus aux flancs (10) du chariot (7) laisse complètement disponible le côté qui peut être concerné par le montage d'un appareil d'essorage.

4. Seau de nettoyage pourvu d'anses (4) suivant la revendication 1,**caractérisé en ce que** la forme particulière des anses (4) qui permet leur application sur les côtés du seau contigus aux flancs (10) du chariot (7) laisse complètement disponible le côté antérieur qui peut s'étendre en porte-à-faux en avant au-delà de la projection en plan du chariot.

5. Seau de nettoyage pourvu d'anses (4) suivant la revendication 1, **caractérisé en ce que** la forme du sommet des anses (4), avec un tronçon curviligne (14) prolongé, sensiblement horizontal, permet l'insertion de la base rabaissée du seau (1) dans le compartiment du chariot (7) délimité antérieurement par une traverse de retenue (8).

## Patentansprüche

1. Putzeimer mit Tragbügeln (4), umfassend Anfangsabschnitte (5) und einen Mittelteil (14), ''wobei der Eimer (1), wenn er auf einem Fahrgestell (7) mit Seitenteilen (10) angebracht ist, die Tragbügel (4) derart aufweist, dass sie sich wegen der Form der Anfangsabschnitte (5) dieser Tragbügel (4) nach unten erstrecken können,
**dadurch gekennzeichnet, dass** die Tragbügel (4) des Eimers, der auf einem Fahrgestell (7) mit Seitenteilen (10) angebracht ist, sich auf der Außenseite der Seitenteile (10) parallel dazu, praktisch damit in Kontakt und bei minimalem Platzbedarf nach unten erstrecken.

2. Putzeimer mit Tragbügeln (4) nach Anspruch 1, **dadurch gekennzeichnet, dass** sein Aufstellen auf das Fahrgestell (7) oder sein Abnehmen von diesem Fahrgestell (7) durch die Ausgestaltung der Scheitelpunkte der Bügel (4) erleichtert wird, die einen geeigneten gekrümmten, nahezu waagerechten Abschnitt (14) umfassen, der es ermöglicht, den Eimer anzuheben, wobei er in einer oder der anderen Richtung geneigt ist, indem die Tragbügel (4) von einer Hand, die im Verhältnis zum Mittelteil (14) dieses Abschnitts davor oder danach angesetzt ist, ergriffen werden.

3. Putzeimer mit Tragbügeln (4) nach Anspruch 1, **dadurch gekennzeichnet, dass** die Form der Tragbügel (4), die ihre Anlage an den Seiten des Eimers an den Seitenteilen (10) des Fahrgestells (7) anliegend ermöglicht, die Seite vollkommen frei lässt, die zum Anbringen einer Auswringvorrichtung in Frage kommt.

4. Putzeimer mit Tragbügeln (4) nach Anspruch 1, **dadurch gekennzeichnet, dass** die besondere Form der Tragbügel (4), die ihre Anlage an den Seiten des Eimers an den Seitenteilen (10) des Fahrgestells (7) anliegend ermöglicht, die Vorderseite vollkommen frei lässt, die sich nach vorne über den Vorsprung in der Ebene des Fahrgestells vorstehend erstrecken kann.

5. Putzeimer mit Tragbügeln (4) nach Anspruch 1, **dadurch gekennzeichnet, dass** die Form des Scheitelpunkts der Tragbügel (4) mit einem verlängerten, gekrümmten, im Wesentlichen waagerechten Abschnitt (14) das Einfügen des abgesenkten Bodens des Eimers (1) in das zuvor von einer Haltequerleiste (8) begrenzte Fach des Fahrgestells (7) ermöglicht.

## Claims

1. A cleaning bucket equipped with handles (4) comprising initial sections (5) and a central part (14), which bucket (1) has handles (4) that may be extended downward when the bucket is mounted on a trolley (7) with sides (10), due to the shape of the initial sections (5) of these handles (4),
**characterized in that** the handles (4) of the bucket, mounted on a trolley (7) with sides (10), extend on the outer face of the sides (10), parallel to the latter and practically in contact with them, and downward with minimal bulk.

2. The cleaning bucket equipped with handles (4) according to claim 1, **characterized in that** its positioning onto the trolley (7) or its removal from this trolley (7) is facilitated thanks to the configuration of the tops of the handles (4) comprising an appropriate curvilinear section (14), practically horizontal, that allows the bucket to be raised by being inclined in one direction or the other, by gripping the handles (4) with one hand placed in front or in back with relation to the central part (14) of this section.

3. The cleaning bucket equipped with handles (4) according to claim 1, **characterized in that** the shape of the handles (4) that allows their application on the sides of the bucket that are contiguous with the sides (10) of the trolley (7) leaves the side that may be affected by the mounting of a wringing apparatus completely available.

4. The cleaning bucket equipped with handles (4) according to claim 1, **characterized in that** the particular shape of the handles (4) that allows their application on the sides of the bucket that are contiguous with the sides (10) of the trolley (7) leaves the front side that may be extended on alternate points in front beyond the plane projection of the trolley completely available.

5. The cleaning bucket equipped with handles (4) according to claim 1, **characterized in that** the shape of the top of the handles (4), with an extended curvilinear section (14), substantially horizontal, allows the reduced base of the bucket (1) to be inserted in the trolley (7) compartment delimited in front by a retaining bar (8).
